(19) Europäisches Patentamt
European Patent Office
Office européen des brevets

(11) **EP 4 279 248 A1**

(12) **EUROPEAN PATENT APPLICATION**
published in accordance with Art. 153(4) EPC

(43) Date of publication:
**22.11.2023 Bulletin 2023/47**

(51) International Patent Classification (IPC):
***B29C 55/02*** *(2006.01)* ***C08J 5/18*** *(2006.01)*

(21) Application number: **22739303.0**

(52) Cooperative Patent Classification (CPC):
**B29C 55/02; C08J 5/18**

(22) Date of filing: **05.01.2022**

(86) International application number:
**PCT/JP2022/000092**

(87) International publication number:
**WO 2022/153893 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.01.2021 JP 2021004287**

(71) Applicant: **Prime Polymer Co., Ltd.
Tokyo 104-0028 (JP)**

(72) Inventors:
• **SEKIYA Keiko
Ichihara-shi, Chiba 299-0108 (JP)**
• **OGUNI Michihiko
Ichihara-shi, Chiba 299-0108 (JP)**

(74) Representative: **J A Kemp LLP
80 Turnmill Street
London EC1M 5QU (GB)**

(54) **STRETCHED FILM, LAMINATE, AND PACKAGE**

(57)    A stretched film including a polyethylene-based resin composition satisfying the following requirements (1) to (3): (1) a melt flow rate (190°C, 2.16 kg load) is 0.01 g/10 min or more and 2.0 g/10 min or less; (2) a density is 935 kg/m$^3$ or more and 970 kg/m$^3$ or less; and (3) a ratio of a melt index ($I_{21}$: 190°C, 21.6 kg load) to a melt index ($I_2$: 190°C, 2.16 kg load), $I_{21}/I_2$ is 80 or more.

EP 4 279 248 A1

**Description**

Technical Field

The present invention relates to a stretched film, a laminate, and a package.

Background Art

In recent years, a law concerning the disposal of various plastics has been enacted against the background of environmental problems, and the need for the recycling of package materials also increases, and therefore, various recyclable packaging materials are examined (for example, see Patent Literatures 1 and 2). Among them, monomaterial materials each consisting of a single material (for example, ALL PE) are attracting attention as recyclable packaging materials.

In typical packaging materials, films consisting of various resins are used as the base material, and the characteristics required for the ALL PE base material include rigidity, low shrinkage properties, and strength. From the viewpoint of rigidity and low shrinkage properties, high density polyethylene (HDPE) is suitable as a resin, but there is a problem in that the machine direction tear strength of HDPE is very weak.

Citation List

Patent Literature

Patent Literature 1: JP6716764A
Patent Literature 2: JP2020-121455A

Summary of Invention

Technical Problem

In view of the above conventional techniques, an object of the present invention is to provide a film having an excellent balance among rigidity, low shrinkage, and machine direction tear strength and usable as a base material of the packaging material.

Solution to Problem

The present inventors have intensively studied in view of the above problems, and as result, found that a stretched film comprising a polyethylene-based resin composition having specific physical properties can solve the above problems, thereby completing the present invention.

The stretched film of the present invention includes a polyethylene-based resin composition satisfying the following requirements (1) to (3):

(1) a melt flow rate (190°C, 2.16 kg load) is 0.01 g/10 min or more and 2.0 g/10 min or less.
(2) a density is 935 kg/m$^3$ or more and 970 kg/m$^3$ or less.
(3) a ratio of a melt index ($I_{21}$: 190°C, 21.6 kg load) to a melt index ($I_2$: 190°C, 2.16 kg load), $I_{21}/I_2$ is 80 or more.

Advantageous Effects of Invention

Since the stretched film of the present invention has an excellent balance among rigidity, low shrinkage, and machine direction tear strength, it can be preferably used as a recyclable packaging material.

Description of Embodiments

The present invention will be described in detail below.

The stretched film of the present invention includes a polyethylene-based resin composition satisfying the following requirements (1) to (3) (hereinafter simply referred to as the "resin composition"). (1) The melt flow rate (MFR: 190°C, 2.16 kg load) is 0.01 g/10 min or more and 2.0 g/10 min or less. (2) The density is 935 kg/m$^3$ or more and 970

kg/m$^3$ or less. (3) The ratio of the melt index ($I_{21}$: 190°C, 21.6 kg load) to the melt index ($I_2$: 190°C, 2.16 kg load), $I_{21}/I_2$ is 80 or more.

[Resin composition]

<Requirement (1)>

The lower limit of the MFR (190°C, 2.16 kg load) of the resin composition is usually 0.01 g/10 min or more, and preferably 0.02 g/10 min or more, and the upper limit is usually 2.0 g/10 min or less, preferably 1.5 g/10 min or less, and more preferably 1.0 g/10 min or less. When the MFR of the resin composition is within the range, strength and extrusion properties can be obtained.

<Requirement (2)>

The lower limit of the density of the resin composition is usually 935 kg/m$^3$ or more, preferably 938 kg/m$^3$ or more, and more preferably 940 kg/m$^3$ or more, and the upper limit is usually 970 kg/m$^3$ or less, preferably 968 kg/m$^3$ or less, and more preferably 965 kg/m$^3$ or less. When the density of the resin composition is within the range, rigidity and strength can be obtained. The density is a value measured in accordance with JIS K7112 (density gradient tube method).

<Requirement (3)>

The lower limit of the ratio of the melt index ($I_{21}$: 190°C, 21.6 kg load) to the melt index ($I_2$: 190°C, 2.16 kg load), $I_{21}/I_2$ of the resin composition is usually 80 or more, preferably 100 or more, and more preferably 120 or more, and the upper limit is preferably 300 or less, and more preferably 250 or less. When $I_{21}/I_2$ of the resin composition is within the range, strength and extrusion properties can be obtained.
The melt index $I_{21}$ is a value measured at 190°C and 21.6 kg load in accordance with JIS K7210, and the melt index $I_2$ is a value measured at 190°C and 2.16 kg load in accordance with JIS K7210.

<Composition>

The resin composition is not particularly limited, as long as it is a polyethylene-based resin composition satisfying the above requirements (1) to (3), and the polyethylene-based polymer as the resin component contained in the resin composition may be a homopolymer of ethylene or may be an ethylene-based copolymer of ethylene and another monomer. The ethylene-based copolymer is particularly preferably a copolymer of ethylene and an α-olefin having 3 or more carbon atoms (an ethylene-α-olefin copolymer). Specific examples of the α-olefin in the ethylene-α-olefin copolymer include propylene, butene, 1-octene, and 1-hexene. Such copolymers can be produced using a known catalyst such as a Ziegler-Natta catalyst and a metallocene catalyst. As a resin component, other low-density polyethylene may be used in addition to the copolymer of ethylene and an α-olefin. In the present invention, one or a combination of two or more polyethylenes satisfying the above-mentioned characteristics can be selected from commercially available polyethylene-based resins and used as a resin component. An example of the polyethylene-based resin containing the ethylene-α-olefin copolymer can include linear low-density polyethylene.
The polyethylene-based polymer may contain one or more constitutional units derived from a biomass-derived monomer (ethylene). The same type of monomers constituting the polymer may be only biomass-derived monomers or both biomass-derived monomers and fossil fuel-derived monomers. The biomass-derived monomer refers to monomers produced by using, for example, plant-derived or animal-derived every reproducible natural raw material including fungi, yeast, algae, and bacteria, and residues thereof as the raw material, in which 14C isotopes are included as the carbon in a proportion of about $1 \times 10^{-12}$, and the biomass carbon concentration (pMC) measured in accordance with ASTM D6866 is about 100 (pMC). The biomass-derived monomer (ethylene) can be obtained by, for example, a conventionally known method.
It is preferable that the polyethylene-based polymer contain a constitutional unit derived from a biomass-derived monomer, from the viewpoint of reducing environmental load. Even when the raw material olefin includes a biomass-derived olefin, the molecular structure thereof except for 14C isotopes included in a proportion of about $1 \times 10^{-12}$ is equivalent to that of a polyethylene-based polymer consisting of a fossil fuel-derived monomer, as long as the polymer production conditions such as the catalyst for polymerization and the polymerization temperature are equivalent. Therefore, the performance of them is not different from each other.
In the resin composition, the ratio of the weight average molecular weight (Mw) to the number average molecular weight (Mn), (molecular weight distribution; Mw/Mn) measured by gel permeation chromatography (GPC) is preferably more than 20, more preferably 21 or more, and particularly preferably 22 or more. The upper limit is not particularly limited, but is preferably 50 or less, and more preferably 48 or less. When Mw/Mn of the resin composition is within the range as described above, a stretched film having excellent tear strength can be obtained.

The resin composition may contain, if needed, at least one of various additives which are added to a typical polyolefin-based resin composition, such as a weathering stabilizer, a heat-resistant stabilizer, an antistatic agent, an antifogging agent, an anti-blocking agent, a slipping agent, a lubricant, a pigment, an antisticking agent, and a nucleating agent, insofar as the object of the present invention is not impaired.

[Stretched film]

The stretched film of the present invention includes the polyethylene-based resin composition of the present invention described above. The stretched film of the present invention may be a uniaxially stretched film or a biaxially stretched film.

The stretch ratio in the stretched film of the present invention is preferably 2.0 times or more, more preferably 2.5 times or more, particularly preferably 3.0 times or more, and most preferably 3.1 times or more. The upper limit of the stretch ratio is not particularly limited, but is preferably 60 times or less, and more preferably 50 times or less. When the stretch ratio is within the range, rigidity and strength can be obtained.

The thickness of the stretched film of the present invention may be appropriately set according to various applications, but typically, the lower limit is preferably 5 $\mu$m or more, more preferably 10 $\mu$m or more, and the upper limit is preferably 150 $\mu$m or less, more preferably 100 $\mu$m or less. When the thickness of the stretched film is within the range, rigidity and strength as a packaging material are well-balanced.

Examples of the method for producing the stretched film of the present invention include, but are not particularly limited to, a method for stretching a film (original film to be stretched) obtained by a known melt extrusion forming method.

Methods for stretching an original film to be stretched include, for example, a method of biaxial stretching in the longitudinal and width directions simultaneously or sequentially by the tenter method, a method of biaxial stretching in the longitudinal and width directions simultaneously by the tubular method, or a method of uniaxial stretching in a flow direction of the film by utilizing a ratio of rotational speeds of two or more rolls.

Uniaxial stretching is preferably carried out by feeding the film into a roll stretching machine, preheating the film with a preheating roll, and then uniaxially stretching the film in the MD direction (take-off direction). In terms of increasing production efficiency, immediately after the original film to be stretched is preheated, the film is preferably uniaxially stretched in the MD direction. Uniaxial stretching in the present invention means stretching in the uniaxial direction, but stretching may be carried out in a direction different from the uniaxial direction to an extent that the effects of the present invention are not impaired. Even when a film is tried to be stretched in the uniaxial direction, the film may be substantially stretched also in a direction different from the uniaxial direction, depending on the stretching equipment used.

The stretched film after stretching may be subjected to annealing treatment, if needed. The annealing treatment can be carried out by bringing the stretched film into contact with a heating roll.

In the stretched film of the present invention, the modulus in the MD direction is preferably more than 1600 MPa, and more preferably 1700 MPa or more. The upper limit of the modulus is not particularly limited, but is actually 7000 MPa or less. When the modulus in the MD direction is within the range as described above, the rigidity of the film can be obtained.

[Laminate]

The laminate of the present invention includes a layer made of the stretched film of the present invention described above. The laminate of the present invention may be an aspect having a plurality of layers made of the stretched film of the present invention. The stretched film of the present invention described above is preferably used as the base material in the laminate. Other layers in the laminate of the present invention may be appropriately employed according to the application.

The laminate of the present invention can be produced by a known method, and examples of the method include coextrusion forming, extrusion lamination, dry lamination, and thermal lamination of one or two or more thermoplastic resins.

[Package]

The package of the present invention includes a layer made of the stretched film of the present invention described above. For example, the package can be obtained by forming the laminate of the present invention described above into a bag-shaped container, filling this container with a product to be packaged (content) in various applications, and then heat sealing the container.

Examples

Hereinafter the present invention will be described in more detail based on Examples, but the present invention is not limited to these Examples, in any way.

In Examples below, the MFR, melt index, density, molecular weight distribution (Mw/Mn), modulus, tear strength, and heat shrinkage ratio were measured as follows.

<Melt flow rate (MFR: [g/10 min])>

The melt flow rate was measured under conditions of 190°C and 2.16 kg load (kgf) in accordance with JIS K7210.

<Melt index>

The melt index $I_{21}$ was measured at 190°C and 21.6 kg load in accordance with JIS K7210, the melt index $I_2$ was measured at 190°C and 2.16 kg load in accordance with JIS K7210, and the melt index ratio $I_{21}/I_2$ was calculated based on them.

<Density [kg/m$^3$]>

The strand obtained in the measurement of the melt index was heat treated at 100°C for 1 hour, left at room temperature for additional 1 hour, and then the density was measured by the density gradient tube method in accordance with JIS K7112.

<Molecular weight distribution (Mw/Mn)>

The weight average molecular weight (Mw), number average molecular weight (Mn), and molecular weight distribution (Mw/Mn) are numerical values measured by gel permeation chromatography (GPC) in terms of polystyrene. Measurement apparatus and conditions are as follows. A calibration curve was prepared using commercial monodisperse polystyrene, and the molecular weight was calculated based on a conversion method.

    Apparatus: gel permeation chromatograph Alliance GP2000 (manufactured by Waters Corporation),
    Analyzer: Empower2 (manufactured by Waters Corporation),
    Column: TSKgel GMH6-HT × 2 + TSKgel GMH6-HTL × 2 (7.5 mm I.D. × 30 cm, manufactured by Tosoh Corporation),
    Column temperature: 140°C,
    Mobile phase: o-dichlorobenzene (containing 0.025% BHT),
    Detector: differential refractometer (RI),
    flow velocity: 1.0 mL/min,
    Injection volume: 400 µL,
    Sampling time interval: 1 s,
    Column calibration: monodisperse polystyrene (manufactured by Tosoh Corporation),
    Molecular weight conversion: old method EPR conversion/calibration method considering viscosity.

<Modulus>

A dumbbell having a size in accordance with JIS K6781 punched from a film was used as a punched specimen. The case of punching in parallel with the take-off direction of the film is referred to as MD (longitudinal direction). The specimen was set up in air chucks of a universal tester and subjected to a tensile test with a chuck distance set to 80 mm and a tensile speed set to 200 mm/min. The slope of the initial stress to the displacement was taken as the modulus.

<Tear strength>

Elmendorf tear strength was measured using an elmendorf tear tester manufactured by Toyo Seiki Seisaku-sho, Ltd. in accordance with JIS K 7128-2. The case where a cut is made in the take-off direction of the film is referred to as the MD direction.

<Heat shrinkage ratio>

The stretched film was cut into a strip having a width of 10 mm × and a length of 100 mm, and the longitudinal direction was taken as the take-off direction (MD). The cut film was put in an air oven heated at 100°C, heated for 15 minutes, and the length of the film was determined. The heat shrinkage ratio was calculated as follows.

```
Heat shrinkage ratio [%] = (100 mm - length after

heating mm)/100 mm × 100
```

[Example 1]

As the polyethylene-based resin composition, "HI-ZEX 7000F" manufactured by Prime Polymer Co., Ltd. having an MFR of 0.04 g/10 min, a density of 952 kg/m$^3$, $I_{21}/I_2$ of 178, and Mw/Mn of 42 was used, and melt-kneaded in an extruder at 200°C, and then, an original film having a thickness of 125 $\mu$m was formed by an inflation forming machine. This original film was uniaxially stretched in a stretch ratio of 5 times while being heated with a heating roll to 115°C, thereby obtaining a uniaxially stretched original having a thickness of 25 $\mu$m. The modulus, tear strength, and heat shrinkage ratio of the obtained stretched film were measured. The results are shown in Table 1.

[Example 2]

A stretched film was obtained in the same manner as in Example 1, except that "HI-ZEX 6300M" manufactured by Prime Polymer Co., Ltd. having an MFR of 0.1 g/10 min, a density of 950 kg/m$^3$, $I_{21}/I_2$ of 222, and Mw/Mn or 27 was used as the polyethylene-based resin composition, and the evaluation was carried out. The results are shown in Table 1.

[Example 3]

A stretched film was obtained in the same manner as in Example 1, except that "HI-ZEX GE100" manufactured by Prime Polymer Co., Ltd. having an MFR of 0.09 g/10 min, a density of 954 kg/m$^3$, $I_{21}/I_2$ of 167, and Mw/Mn of 31 was used as the polyethylene-based resin composition and the original film was heated to 120°C with a heating roll, and the evaluation was carried out. The results are shown in Table 1.

[Comparative Example 1]

As the polyethylene-based resin composition, "HI-ZEX 7000F" manufactured by Prime Polymer Co., Ltd. having an MFR of 0.04 g/10 min, a density of 952 kg/m$^3$, $I_{21}/I_2$ of 178, and Mw/Mn of 42 was used and subjected to air cooling inflation forming with an inflation forming apparatus under the following conditions to produce a film (non-stretched) having a thickness of 40 $\mu$m. The modulus and tear strength of the obtained non-stretched film were measured. The heat shrinkage ratio was not measured because it was a non-stretched film. The results are shown in Table 1.

<Film formation conditions>

Forming machine: 65 mm$\varphi$ inflation forming machine manufactured by Modern Machinery Company.
Die: 125 nm$\varphi$ (diameter), 4.0 mm (lip width)
Forming temperature: 190°C
Extrusion rate: 50 kg/h
Take-off speed: 20.5 m/min

[Comparative Example 2]

A non-stretched film was produced in the same manner as in Comparative Example 1, except that "HI-ZEX 3300F" manufactured by Prime Polymer Co., Ltd. having an MFR of 1.1 g/10 min, a density of 950 kg/m$^3$, $I_{21}/I_2$ of 32, and Mw/Mn of 6 was used as the polyethylene-based resin composition, and the evaluation was carried out. The results are shown in Table 1.

[Comparative Example 3]

A non-stretched film was produced in the same manner as in Comparative Example 1, except that "Evolue SP3010" manufactured by Prime Polymer Co., Ltd. having an MFR of 0.75 g/10 min, a density of 926 kg/m$^3$, $I_{21}/I_2$ of 31, and Mw/Mn of 11 was used as the polyethylene-based resin composition, and the evaluation was carried out. The results are shown in Table 1.

[Comparative Example 4]

A stretched film was produced in the same manner as in Example 1, except that "HI-ZEX 3300F" manufactured by Prime Polymer Co., Ltd. having an MFR of 1.1 g/10 min, a density of 950 kg/m$^3$, $I_{21}/I_2$ of 32, and Mw/Mn of 6 was used as the polyethylene-based resin composition, and the evaluation was carried out. The results are shown in Table 1.

[Comparative Example 5]

A stretched film was produced in the same manner as in Example 1, except that "Evolue SP3010" manufactured by Prime Polymer Co., Ltd. having an MFR of 0.75 g/10 min, a density of 926 kg/m$^3$, $I_{21}/I_2$ of 31, and Mw/Mn of 11 was used as the polyethylene-based resin composition, and the evaluation was carried out. The results are shown in Table 1.

[Table 1]

| | | Unit | Ex. 1 | Ex. 2 | Ex. 3 |
|---|---|---|---|---|---|
| Film formation method | | | Stretching by 5 times | Stretching by 5 times | Stretching by 5 times |
| Resin physical properties | MFR | g/IO min | 0.04 | 0.1 | 0.09 |
| | Density | kg/m$^3$ | 952 | 950 | 954 |
| | $I_{21}/I_2$ | - | 178 | 222 | 167 |
| | Mw/Mn | - | 42 | 27 | 31 |
| Film physical properties | Film thickness | μm | 25 | 25 | 25 |
| | Modulus (MD direction) | MPa | 4437 | 3116 | 4000 |
| | Tear strength (MD direction) | N | 3.6 | 2.9 | 1.1 |
| | Heat shrinkage ratio 100°C (MD direction) | % | 1.4 | 12 | 4.0 |
| | | Unit | Comp. Ex. 1 | Comp. Ex. 2 | Comp. Ex. 3 |
| Film formation method | | | Inflation (non-stretched) | Inflation (non-stretched) | Inflation (non-stretched) |
| Resin physical properties | MFR | g/IO min | 0.04 | 1.1 | 0.75 |
| | Density | kg/m$^3$ | 952 | 950 | 926 |
| | $I_{21}/I_2$ | - | 178 | 32 | 31 |
| | Mw/Mn | - | 42 | 6 | 11 |
| Film physical properties | Film thickness | μm | 40 | 40 | 40 |
| | Modulus (MD direction) | MPa | 1566 | 1235 | 536 |
| | Tear strength (MD direction) | N | 0.15 | 0.22 | 0.83 |
| | Heat shrinkage ratio 100°C (MD direction) | % | - | - | - |

(continued)

| | | Unit | Comp. Ex. 4 | Comp. Ex. 5 |
|---|---|---|---|---|
| Film formation method | | | Stretching by 5 times | Stretching by 5 times |
| Resin physical properties | MFR | g/10 min | 1.1 | 0.75 |
| | Density | kg/m$^3$ | 950 | 926 |
| | $I_{21}/I_2$ | - | 32 | 31 |
| | Mw/Mn | - | 6 | 11 |
| Film physical properties | Film thickness | $\mu$m | 25 | 25 |
| | Modulus (MD direction) | MPa | 3749 | 920 |
| | Tear strength (MD direction) | N | 0.1 | 0.23 |
| | Heat shrinkage ratio 100°C (MD direction) | % | 1.1 | 26 |

**Claims**

1. A stretched film comprising a polyethylene-based resin composition satisfying following requirements (1) to (3):

    (1) a melt flow rate (190°C, 2.16 kg load) is 0.01 g/10 min or more and 2.0 g/10 min or less;
    (2) a density is 935 kg/m$^3$ or more and 970 kg/m$^3$ or less; and
    (3) a ratio of a melt index ($I_{21}$: 190°C, 21.6 kg load) to a melt index ($I_2$: 190°C, 2.16 kg load), $I_{21}/I_2$ is 80 or more.

2. The stretched film according to claim 1, wherein a ratio of a weight average molecular weight (Mw) to a number average molecular weight (Mn), (molecular weight distribution; Mw/Mn) in the polyethylene-based resin composition measured by gel permeation chromatography (GPC) is more than 20.

3. The stretched film according to claim 1, wherein a stretch ratio is 2.0 times or more.

4. The stretched film according to claim 1, wherein a modulus in MD direction is more than 1600 MPa.

5. A laminate comprising a layer made of the stretched film according to any one of claims 1 to 4.

6. A package comprising a layer made of the stretched film according to any one of claims 1 to 4.

## INTERNATIONAL SEARCH REPORT

| International application No. |
|---|
| **PCT/JP2022/000092** |

**A. CLASSIFICATION OF SUBJECT MATTER**

*B29C 55/02*(2006.01)i; *C08J 5/18*(2006.01)i
FI:   C08J5/18 CES; B29C55/02

According to International Patent Classification (IPC) or to both national classification and IPC

**B. FIELDS SEARCHED**

Minimum documentation searched (classification system followed by classification symbols)

B29C55/02; C08J5/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 2020/0369841 A1 (EXXONMOBIL CHEMICAL PATENTS INC.) 26 November 2020 (2020-11-26)<br>claims | 1-6 |
| A | JP 2005-538218 A (EXXONMOBILE CHEMICAL PATENTS INC.) 15 December 2005 (2005-12-15)<br>claims | 1-6 |
| A | JP 2007-529618 A (DOW GLOBAL TECHNOLOGIES INC.) 25 October 2007 (2007-10-25)<br>claims, table 1 | 1-6 |
| A | JP 2007-269917 A (MITSUI CHEMICALS INC.) 18 October 2007 (2007-10-18)<br>paragraph [0168] | 1-6 |
| A | JP 8-300439 A (SAKAI, Susumu) 19 November 1996 (1996-11-19)<br>paragraph [0016] | 1-6 |
| A | JP 2007-297583 A (MITSUBISHI PLASTICS INC.) 15 November 2007 (2007-11-15)<br>paragraph [0059] | 1-6 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 March 2022** | **22 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| | International application No. |
|---|---|
| | **PCT/JP2022/000092** |

**C.      DOCUMENTS CONSIDERED TO BE RELEVANT**

| Category* | Citation of document, with indication, where appropriate, of the relevant passages | Relevant to claim No. |
|---|---|---|
| A | JP 10-292059 A (MITSUI CHEMICALS INC.) 04 November 1998 (1998-11-04) | 1-6 |
| A | WO 2019/172375 A1 (PRIME POLYMER CO., LTD.) 12 September 2019 (2019-09-12) claims | 1-6 |

**INTERNATIONAL SEARCH REPORT**
Information on patent family members

International application No.

**PCT/JP2022/000092**

| Patent document cited in search report | | | Publication date (day/month/year) | Patent family member(s) | | | Publication date (day/month/year) |
|---|---|---|---|---|---|---|---|
| US | 2020/0369841 | A1 | 26 November 2020 | WO claims | 2018/071250 | A1 | |
| JP | 2005-538218 | A | 15 December 2005 | US claims | 2004/0048019 | A1 | |
| | | | | WO | 2004/022634 | A1 | |
| | | | | EP | 1539866 | A1 | |
| | | | | CN | 1678669 | A | |
| JP | 2007-529618 | A | 25 October 2007 | US claims | 2007/0172685 | A1 | |
| | | | | WO | 2005/090464 | A1 | |
| | | | | EP | 1727861 | A1 | |
| | | | | KR | 10-2006-0129477 | A | |
| | | | | CN | 1934184 | A | |
| JP | 2007-269917 | A | 18 October 2007 | US examples | 2009/0137729 | A1 | |
| | | | | WO | 2007/114102 | A1 | |
| | | | | EP | 2002963 | A2 | |
| JP | 8-300439 | A | 19 November 1996 | (Family: none) | | | |
| JP | 2007-297583 | A | 15 November 2007 | (Family: none) | | | |
| JP | 10-292059 | A | 04 November 1998 | (Family: none) | | | |
| WO | 2019/172375 | A1 | 12 September 2019 | US claims | 2021/0009794 | A1 | |
| | | | | CN | 111819237 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6716764 A

- JP 2020121455 A